# EUROPEAN PATENT SPECIFICATION

(11) **EP 3 374 726 B1**
(45) Date of publication and mention of the grant of the patent: **25.05.2022**
(21) Application number: 16795027.8
(22) Date of filing: 11.11.2016
(51) Int. Cl.: F41H 5/04, B29C 70/34, B32B 5/02, B32B 5/26

(54) **IMPACT RESISTANT COMPOSITE MATERIAL**
SCHLAGFESTES VERBUNDMATERIAL
MATÉRIAU COMPOSITE RÉSISTANT AUX CHOCS

(30) Priority: 13.11.2015 EP 15194512; 03.05.2016 EP 16168157
(43) Date of publication of application: 19.09.2018
(73) Proprietor: DSM IP Assets B.V., 6411 TE Heerlen (NL)
(72) Inventor: SCHEERDER, Jurgen, 6100 AA Echt (NL)
(86) International application number: PCT/EP2016/077422
(87) International publication number: WO 2017/081246

(56) References cited:
- EP-A1- 0 620 410
- EP-A1- 0 987 363
- US-A1- 2004 084 304

## Description

The invention relates to a preformed sheet, comprising a network of polyethylene fibers having a tensile strength of at least 1.5 GPa, which is impregnated with at least 10% of a plastic material. The invention further relates to an assembly of at least two preformed sheets and to a flexible ballistic-resistant article comprising said assembly.

US4623574 describes an improved, ballistic-resistant composite article, which comprises a network of fibers being a fabric or substantially parallel, unidirectionally aligned fibers and a soft type matrix material with a tensile modulus at 23 °C of less than 41,3 MPa and a glass transition temperature of less than 0 °C, preferably less than -40 °C. Disclosed matrix systems include Kraton^{®} triblock polystyrene-polyisoprene-polystyrene copolymer.

WO2004039565A describes a process for the manufacture of a ballistic resistant article in which a stack of monolayers is formed, each monolayer containing unidirectionally oriented reinforcing fibers and at most 30 mass% of a plastic matrix material, the reinforcing fibers being highly-drawn polyethylene (UHMWPE), fibers and with the fiber direction in each monolayer being rotated with respect to the fiber direction in an adjacent monolayer. The plastic matrix material has a 100% modulus of between 5 and 500 MPa. It is shown that the claimed stiff plastic matrix material systems have high projectile stopping performance at higher temperature of 80 °C, whereas at room temperature softer matrix systems performs better.

EP0987363A1 describes the use of binder based on a cross-linkable unsaturated ethylene based polymer powder with a Tg of above 40 °C in the manufacture of ballistic resistant fabrics. In Example 1 of this publication, 12 layers of aramid fabric are electrostatically spray coated with a powder comprising 98wt% of a styrene-butylacrylate copolymer with 5% acrylic acid and a Tg of 60 °C, and 5 wt% epoxy crosslinking agent, followed by curing for 2 minutes at 170 °C and stacking the layers with subsequent pressing for 1 minute at 1 bar at 180 °C to create a panel of 6mm thickness. In comparative experiment 3 an aqueous dispersion of a styrene-butylacrylate copolymer with 5% acrylic acid and 5 wt% epoxy crosslinking agent was coated on the aramid layers in a same amount of 30 grams as in example 1, followed by stacking 12 layers and 1 minute pressing at 1 bar at 180 °C to create a panel of a thickness of also 6mm thickness. Upon shooting from 10 m distance it proved that the panel of example 1 stopped all the bullets, while the panel of experiment 3 was completely penetrated by all bullets. Analysis of the panels with Scanning Electron Microscopy showed that the aramid fibers in example 1 were irregularly covered, while the fibers in example 3 were completely covered with the binder material.

US 2004/084304 A1 discloses another composite article.

Despite the fact that the known composite articles show reasonable antiballistic performance, there is a need for an increased bullet stopping power.

An objective of the present invention is to provide a flexible composite material that shows increased bullet stopping power than composites known so far.

This object is achieved by a preformed sheet according to claim 1 and the use of such a preformed sheet according to claim 14.

Thermoplastic materials based on acrylic resins as such are well known in the art with a wide range of glass transition temperatures. The acrylic resin used in the present invention has a Tg at least 25 °C, preferably at least 35 °C, more preferably at least 45 °C, even more preferably at least 55 °C. Usually, the Tg of polymer will be within the range of from 25 to 120°C, more usually from 30 to 90°C. In a special embodiment the thermoplastic acrylic resin used in the present invention has a Tg of between 25 °C and 53 °C and is applied as an aqueous dispersion.

A thermoplastic acrylic resin with a Tg of at least 25 °C preferably comprises an acrylic polymer comprising methyl methacrylate, ethyl acrylate and/or butyl acrylate. The acrylic polymer may be based on acid group comprising precursors in an amount of 0-10 wt%, preferably 0.1-8 wt%, more preferably 0.5-7 wt%, even more preferably 0.5-6 wt%, most preferably 0.5-4 wt%, and furthermore may be based on -OH functional monomers in an amount of between 0-30 wt%, preferably between 0-20 wt%, more preferably between 0-15 wt%, even more preferably between 0-10 wt% and most preferably between 1-10 wt%. The number average molecular weight of the acrylic polymer is usually at least 1000 g/mol, more usually at least 2,000 g/mol. The upper limit does not usually exceed 2,000,000 g/mol. Typically the number average molecular weight ranges between 5,000 g/mol and 800,000 g/mol, preferably between 10,000 g/mol and 500,000 g/mol, more preferably between 100,000 g/mol and 500,000 g/mol. In another embodiment, the weight average molecular weight of the acrylic polymer is usually at least 10 000 g/mol, more usually at least 20,000 g/mol. The upper limit does not usually exceed 4,000,000 g/mol. Typically the weight average molecular weight ranges between 15,000 g/mol and 2,500,000 g/mol, preferably between 20,000 g/mol and 2,000,000 g/mol, more preferably between 50,000 g/mol and 1,500,000 g/mol.

The acrylic polymer for use in the invention may be an emulsion comprising polymer particle sizes from 20-600 nm, more preferably from 30-400 nm and most preferably from 50-300 nm. This emulston typically has a pH between 2-11, preferably between 3-10 and more preferably between 4-9. The solid content typically ranges from 10-60 wt%, preferably from 20-55 wt%, most preferably from 30-50 wt%. The mentioned acrylics are described in more detail below.

The acrylic resin or acrylic polymer used in the present the invention includes vinyl polymers and preferably comprises (meth)acrylates and optionally also (meth)acrylics, including methyl methacrylate, ethyl acrylate and/or butyl acrylate, and styrene-(meth)acrylates or styrene-(meth)acrylics.

By a vinyl polymer is meant generally herein a polymer derived from the addition polymerization (normally by a free-radical process) of at least one olefinically unsaturated monomer. By a vinyl monomer is therefore meant generally herein an olefinically unsaturated monomer capable of undergoing free-radical polymerization. The vinyl polymer is preferably formed from 0 to 10 wt.% of at least one vinyl monomer containing an acid functional group(s) (monomer (i)) and from 90 to 100 wt.% of another vinyl monomer not comprised in (i) (monomer (ii)). Examples of such vinyl monomers (ii) include conjugated dienes, optionally substituted dienes,; styrene and substituted styrenes; olefines such as ethylene or propylene; vinyl halides; vinyl esters such as vinyl acetate, vinyl propionate, vinyl laurate, and vinyl esters of versatic acid such as VeoVa^{™} 9 and VeoVa^{™} 10 (VeoVa is a trademark of Shell); heterocyclic vinyl compounds, dialkyl esters of mono-olefinically unsaturated dicarboxylic acids (such as di-n-butyl maleate and di-n-butyl fumarate; vinyl ethers; and, in particular, esters of acrylic acid and methacrylic acid of formula:

CH₂ = CR₁CO₂R₂

where
R₁ is H or methyl and
R₂ is optionally substituted alkyl of 1 to 20 carbon atoms, preferably 1 to 8 carbon atoms, or cycloalkyl of 5 to 12 ring carbon atoms.

Further specific examples of such monomers include alkyl esters and (chloro)alkyl esters such as methyl a-chloroacrylate, n-propyl a-chloroacrylate, n-butyl a-chloroacrylate, beta -chloroethyl acrylate, beta -chlorobutyl acrylate, methyl (meth)acrylate, ethyl (meth)acrylate, propyl (meth)acrylate (all isomers), butyl (meth)acrylate (all isomers), isobomyl (meth)acrylate, cyclohexyl (meth)acrylate, 2-ethylhexyl (meth)acrylate, octyl (meth)acrylate, lauryl (meth)acrylate, trifluoroethyl(meth)acrylate, diethyl maleate, diethyl fumarate; vinyl esters such as allyl acetate, allyl chloroacetate, methallyl acetate, vinyl acetate, isopropenyl acetate; vinyl halides such as vinyl chloride, vinylidene chloride, allyl chloride, 1,2-dichloropropene-2, methallyl chloride and trichloroethylene; nitriles such as acrylonitrile and methacrylonitrile; vinyl aryls such as styrene, a-methyl styrene, o-methyl styrene, m- methyl styrene, p-methyl styrene, pentachlorostyrene, o-chlorostyrene, m-chlorostyrene, p-chlorostyrene and p-cyanostyrene; conjugated dienes or chlorodienes such as butadiene and chloroprene; and vinyl-substituted heterocyclic imines such as 2-vinyl- pyridine and vinyl carbazole. Other vinyl monomer(s) which may also be used to form vinyl polymer are those bearing a functional group(s) (and not already mentioned above). These can include for example hydroxyl functional monomers such as hydroxyethylacrylate (HEA) and hydroxylethylmethacrylate (HEMA), and olefinically unsaturated amides such as acrylamide, and methacrylamide. The amount of such functional monomer(s) incorporated as part of (iii) is 0 to 20 wt percent, preferably 0 to 7 wt percent, more preferably 0 to 2 wt percent based on total monomer composition to form said vinyl polymer. In most cases, however, no such functional monomer(s) is used. Other vinyl monomer(s) which may also be used to form vinyl polymer are those bearing a crosslinkable group(s) (and not already mentioned above). The crosslinkbale groups impart crosslinkablity either when combined with a crosslinking agent or by reaction with each other. Vinyl monomers carrying crosslinkable groups include for example allyl, glycidyl or acetoacetoxy esters, acetoacetoxy amides, keto and aldehyde functional vinyl monomers, keto- containing amides such as diacetone acrylamide, and silane functional (rneth)acrylic monomers. Preferred vinyl monomers carrying crosslinkable groups are acetoacetoxy ethyl methacrylate (AAEM), diacetone acrylamide (DAAM) and silane functional (meth)acrylic monomers and most preferably DAAM. Particularly preferred vinyl monomer(s) (ii) are selected from one or more of methyl methacrylate, n-butyl acrylate, n-butyl methacrylate, ethyl acrylate, ethyl methacrylate, 2-ethylhexyl acrylate, styrene, and acrylonitrile.

The vinyl monomer(s) (i) containing an acid functional group is preferably an olefinically unsaturated monocarboxylic or dicarboxylic acid, examples of which include acrylic acid, methacrylic acid, 2-carboxyethyl acrylate, fumaric acid, maleic acid, itaconic acid, and mono-substituted C1-C20 alkyl esters of dicarboxylic acids. Monocarboxylic acid(s) is preferred and particularly preferred monomer(s) for (i) are one or both of methacrylic acid and acrylic acid.

The vinyl polymers can be prepared by any free radical polymerization method known in the art, such as emulsion or suspension polymerization. Emulsion polymerization is preferred. The polymers can be prepared using the various polymerization methods known in the art such as single batch, sequential and gradient polymerization, also commonly known as a power feed polymerization. If desired, a preformed or in-situ formed seed can be used.

The polymerization of a monomer composition to form a vinyl polymer will normally require the use of a free-radical-yielding initiator(s) to initiate the polymerization Suitable free-radical-yielding initiators include inorganic peroxides such as K, Na or ammonium persulphate, hydrogen peroxide, or percarbonates; organic peroxides, such as acyl peroxides including for example benzoyl peroxide, alkyl hydroperoxides such as t-butyl hydroperoxide and cumene hydroperoxide; dialkyl peroxides such as di-t-butyl peroxide; peroxy esters such as t-butyl perbenzoate and the like; mixtures may also be used EDTA (EDTA: ethylene diamine tetraacetic acid) may also be usefully employed as part of a redox initiator system. Surfactants can be utilised in order to assist in the dispersion or emulsification of the polymerisaing monomers and the resulting vinyl polymer A in water Suitable surfactants include but are not limited to conventional anionic, cationic and/or non-ionic surfactants and mixtures thereof such as Na, K and NH4 salts of dialkylsulphosuccinates, Na, K and NH4 salts of sulphated oils, Na, K and NH4 salts of alkyl sulphonic acids, Na, K and NH4 alkyl sulphates, alkali metal salts of sulphonic acids; fatty alcohols, ethoxylated fatty acids and/or fatty amides, and Na, K and NH4 salts of fatty acids such as Na stearate and Na oleate Other anionic surfactants include alkyl or (alk)aryl groups linked to sulphonic acid groups, sulphuric acid half ester groups (linked in turn to polyglycol ether groups), phosphonic acid groups, phosphoric acid analogues and phosphates or carboxylic acid groups. Cationic surfactants include alkyl or (alk)aryl groups linked to quaternary ammonium salt groups Non-ionic surfactants include polyglycol ether compounds and preferably polyethylene oxide compounds. The molecular weight Mw of the vinyl polymer can be lowered by using a chain transfer agent (CTA) such as 3-mercapto propionic acid or n-lauryl mercaptane in the polymerization process. Catalytic chain transfer polymerization using specific Co chelate catalysts as CTA can also be used to lower Mw.

As elaborated the specially preferred matrix material in the present invention is a thermoplastic matrix material based on an acrylic resin or acrylic polymer which has a glass transition temperature of at least 25 °C. Alternative embodiments of matrix material not falling under the scope of the invention may comprise thermosetting equivalents based on acrylic resin or acrylic polymer with a glass transition temperature of at least 25 °C.

The stopping power for bullets or fragments, herein after referred to as fragments of armor is expressed as V50, or relative to its weight/thickness as energy absorption, Eabs. The preformed sheet of the invention has an improved Eabs. The advantage of a high Eabs is that fragments or projectiles having a given velocity can be stopped by a layered article with a substantially lower areal mass. The areal mass indicates the mass per m2 of surface of the article, and is also referred to as areal density. A low areal mass is very important for increasing the wearing comfort, which together with good protection is the main objective when developing new materials in ballistic-resistant clothing. A reduction in mass is also of advantage in case of e.g. vehicle or helicopter armouring.

The preformed sheets according to the invention prove to have a reduced, hence improved, backface deformation. Backface deformation is in the art also referred to as backface signature or trauma. Additional advantages of an article comprising a plurality of the preformed sheets according to the invention are an improved printability and stab resistance. Stab resistance in the art is known as being able to withstand stabbing with e.g. a knife. A product that is able to withstand both ballistic impact (bullets and or fragments) and stab is generally referred to as multi-threat use. At the same time the higher stiffness may result in end-products that have increased rigidity. Such is of importance for e.g. helmets (improved 'ear-to-ear stiffness'), pressed inserts, especially when combined with ceramics, and structural vehicle parts. When used in soft body applications and the wearing comfort would need additional improvement, the preformed sheets of the invention may be (multiple) flexed, wrinkled or otherwise subjected to multiple bending to increase their flexibility.

The network of fibers may be a fabric (woven with e.g. plain, basket, satin and crow feet weaves), but it may also be a knitted network, or a network formed into a fabric in any of a variety of conventional techniques. For example, the fiber network could also be a "non-woven", including felt.

In the above-mentioned fiber networks, the acrylic based thermoplastic material is present in the preformed sheet in an amount of at most 70 mass%, preferably at most 60 mass% and more preferably at most 50 mass%. A network of fibers of the preformed sheet comprises at least 10%, preferably at least 15 mass%, more preferably at least 20 mass% of the acrylic based thermoplastic material. Typically acrylic based thermoplastic material is present in the preformed sheet in an amount of between 10-60 mass%, preferably between 20-50 mass%, more preferably between 30-40 mass%.

A network of fibers may comprise a stack of two or more layers of fabric. In a stack of two or more fabric layers there may be an angle β between the two adjacent layers, wherein β is the smallest angle between two fiber directions in adjacent layers of the stack. The angle β is typically in a range of between 0 and 45 degrees. Preferably the angle β between two adjacent layers is 0 degrees.

Alternatively, the network of fibers comprises one or more monolayers of substantially parallel, unidirectionally aligned fibers.

Within the context of the present application monolayer means a layer of substantially parallel reinforcing fibers embedded in a plastic matrix material. The term plastic matrix material means a material, which holds the fibers together and which preferably wholly or at least partially encapsulates the fibers. Such monolayers (also called prepregs by one skilled in the art) and the methods of obtaining such monolayers are disclosed in for instance EP 191306 and WO 95/00318 A1. A monolayer may be obtained by orienting a plurality of fibers in coplanar and parallel fashion in one plane, for instance by pulling a number of fibers or yarns from a fiber bobbin frame over a comb, and impregnating the fibers with the plastic matrix material in a known way before, during or after orienting. In this process, fibers may be used that have previously been coated with a polymer other than the plastic matrix material in order to, for instance, protect the fibers during handling or in order to obtain better adhesion of the fibers onto the plastic of the monolayer. Preferably, uncoated fibers are used. The fibers may have had a treatment before coating or contacting the fibers with the plastic matrix material. Such treatment included plasma or corona treatment.

In a preformed sheet with two or more layers, the direction of the aligned fibers in two subsequent monolayers in the stack typically differs by an angle α. Although the angle α may be selected within wide ranges, angle α is preferably between 45 and 135 degrees, more preferably between 65 and 115 degrees and most preferably between 80 and 100 degrees. In the latter preferred range a particularly preferred angle α is about 90 degrees. A preformed sheet produced according to this preferred embodiment is denoted as a cross ply in the art.

In a cross ply the fiber network occupies different proportions of the total volume of the sheet. Preferably, however, the fiber network comprises at least about 50 volume percent of the composite, more preferably between about 70 volume percent, and most preferably at least about 75 volume percent, with the matrix optionally occupying the remaining volume.

The term fiber comprises not only a monofilament but, inter alia, also a multifilament yarn or flat tapes. The term unidirectionally oriented fibers refers to fibers that, in one plane, are essentially oriented in parallel. Width of the flat tape preferably is between 2 mm and 100 mm, more preferably between 5 mm and 60 mm, most preferably between 10 mm and 40 mm. Thickness of the flat tape preferably is between 10 µm and 200 µm, more preferably between 25 µm and 100 µm. The flat tape may be composed of a single member of one material, but may also comprise unidirectionally oriented fibers and optionally a matrix material.

A preformed sheet of the present invention includes a network of polyethylene fibers. Preferably the fiber network includes ultra-high molecular mass polyethylene fiber.

The fibers used in the network of the present invention have a strength of at least 1.5 GPa, preferably at least 2.5 GPa. More preferably the fibers used in the network of the present invention have a strength of at least at least 3.5 GPa which results in an even better combination of high projectile stopping performance and end products with increased rigidity and/or back face signature. Even more preferably the fibers used in the network of the present invention have a strength of at least 4GPa for obtaining products with better multi-threat performance, and most preferably at least 4.5 GPa.

Good results are obtained if linear polyethylene (PE) is selected as the polyolefin. Linear polyethylene is herein understood to mean polyethylene with less than 1 side chain per 100 C atoms, and preferably with less than 1 side chain per 300 C atoms; a side chain or branch generally containing at most 10 C atoms. The linear polyethylene may further contain up to 5 mol% of one or more other alkenes that are copolymerisable therewith, such as propene, butene, pentene, 4-methylpentene, octene. Preferably, the linear polyethylene is of high molar mass with an intrinsic viscosity (IV, as determined on solutions in decalin at 135°C) of at least 4 dl/g; more preferably of at least 8 dl/g. Such polyethylene is also referred to as ultra-high molecular mass polyethylene (UHPE).

High performance polyethylene (HPPE) fibers consisting of polyethylene filaments that have been prepared by a gel spinning process, such as described, for example, in GB 2042414 A or WO 01/73173, are preferably used. A gel spinning process essentially consists of preparing a solution of a linear polyethylene with a high intrinsic viscosity, spinning the solution into filaments at a temperature above the dissolving temperature, cooling down the filaments to below the gelling temperature, such that gelling occurs, and stretching the filaments before, during or after the removal of the solvent. This stretching results in drawn fibers that have a strength of at least 1.5 GPa. If these polyethylene fibers are highly drawn, they have a strength of at least 3.0 GPa.

The tapes as mentioned here above may also be made via a gel spinning process, but may also be obtained by a solid state process whereby polymer powder is compacted and drawn to obtain tapes with the desired strength.

The preformed sheet may, optionally, further comprise a separating film on, and bonded to, at least one of its outer surfaces. Such a separating film ensures that one or more preformed sheets in a ballistic resistant article or an assembly of preformed sheets of the invention, optionally combined with other sheets, remain separate from one another. This embodiment has the advantage that the flexibility, or wearing comfort of a ballistic resistant article or an assembly is higher. Such separating film in particular is preferable if a tacky matrix material is used. The separating film used may, for example, comprise a polyolefin film, including linear low-density polyethylene available under the Stamylex^{®} trademark, polypropylene films, polyester films. Thickness of such films generally is between 1 and 50 micrometers, preferably between 2 and 25 micrometer. More preferably between 2 and 10 micrometer, and most preferably 3 and 6 micrometer.

Preferably the separating film is a biaxially stretched polyolefin film. Examples hereof are biaxially stretched high-density polyethylene and biaxially stretched polypropylene film.

In case the fiber network is a fabric, a knitted network, or a "non-woven", impregnation of the network with thermoplastic material based on an acrylic resin is typically effected with a water-based dispersion. After complete or partial evaporation of the water, the preformed sheet may pass through heated pressure device, including pressure rolls.

Impregnation of unidirectionally aligned fibers with a plastic matrix material can for instance be effected by applying one or more films of the plastic to the top, bottom or both sides of the plane of the fibers and then passing these, together with the fibers, through heated pressure rolls. Preferably, however, the fibers, after being oriented in parallel fashion in one plane, are coated with an amount of a liquid substance containing the plastic matrix material of the monolayer. The advantage of this is that more rapid and better impregnation of the fibers is achieved. The liquid substance may be for example a solution, dispersion or a melt of the plastic. If a solution or a dispersion of the plastic matrix material is used in the manufacture of the monolayer, the process also comprises evaporating the solvent or dispersant, preferably followed by compressing under elevated temperature. Such temperatures and pressures are easily determined by routine experimentation, and typically will be between 70 °C and the melting temperature of the fibers, preferably between 75-135 °C, and between 1 and 100 bar, preferably between 5 and 80 bar, more preferably between 10 and 60 bar.

A special preferred embodiment relates to the use of an aqueous dispersion of the thermoplastic matrix material according to the invention, whereby water is at least partially, preferably for at least 90wt%, more preferably for at least 99wt%, evaporated after application to HPPE fibers whereby these fibers have a strength of at least 3.5 GPa.

The invention further relates to an assembly of at least two preformed sheets according to the invention. The sheets are substantially not linked to one another. With increasing number of preformed sheets, the ballistic protection level is improved, but the weight of the assembly increases, and the flexibility decreases. In order to obtain a maximum flexibility, adjacent sheets in an assembly are preferably not linked to one another. However, to achieve some level of coherence the assembly of preformed sheets may, for example, be stitched through at e.g. the corners. Alternatively the assembly of preformed sheets may be put in a cover or an envelope. Depending on the ballistic threat and the level of protection desired, the skilled person can find an optimum in the number of sheets by some experimentation.

A further embodiment comprises a ballistic-resistant article comprising at least one assembly as defined above.

The invention also relates to a ballistic-resistant article comprising a plurality of preformed sheets according to the invention. Preferably, the ballistic-resistant article comprises a network of fibers comprising a fabric with fibers being highly drawn polyethylene fibers. This embodiment has an Eabs of at least 115 J/kg/m² against 9mm*19 Natoball DM11 A1B2 bullet manufactured by MEN, Germany. In another preferred embodiment a ballistic-resistant article comprising a plurality of preformed sheets with unidirectionally aligned highly drawn polyethylene fibers according to the invention has an Eabs of at least 180 J/kg/m², preferably an Eabs at least 190 J/kg/m², more preferably an Eabs of at least 200 J/kg/m², and most preferably an Eabs of at least 210 J/kg/m² against 9mm*19 Natoball DM11 A1B2 bullet manufactured by MEN, Germany.

Another preferred embodiment comprises a soft ballistic-resistant article comprising a plurality of preformed sheets with unidirectionally aligned highly drawn polyethylene fibers with a strength of at least 3.5 GPa and an acrylic resin having a Tg at least 25 °C, the article having an Eabs of at least 180 J/kg/m² against 9mm*19 Natoball DM11 A1B2 bullet manufactured by MEN, Germany, and furthermore has a downward deflection of at most 100mm.Preferably this soft ballistic-resistant article has an Eabs of at least 190 J/kg/m² and furthermore has a downward deflection of at most 90mm. More preferably this soft ballistic-resistant article has an Eabs of at least 200 J/kg/m² and furthermore has a downward deflection of at most 80mm.

The invention further relates to a ballistic-resistant article comprising a plurality of preformed sheets, wherein the network of fibers comprises a fabric impregnated with the thermoplastic acrylic resin of the present invention with a Tg of at least 25 °C, the article further comprising at least two networks of unidirectionally aligned fibers with optionally a matrix. Preferably the fibers in the at least one of the fabric or unidirectionally aligned fibers are polyethylene fibers with a strength of at least 3.5 GPa to achieve a good multi-threat performance and more preferably at least 4.0 GPa. The ballistic resistant article may be in the form of a pressed product, so-called hard ballistics, or in the form of a flexible product, so-called soft ballistics. The matrix material used in the network of unidirectionally aligned fibers may be an acrylic based thermoplastic material with a glass transition temperature of at least 25 °C according to the invention. Alternatively the preformed sheet of the invention may be combined with a sheet comprising unidirectionally aligned fibers and a matrix. This matrix may comprise another material than the acrylic based resin. Suitable alternative matrix materials for networks of unidirectionally aligned fibers include thermoplastic and thermosetting materials. Preferably, thermoplastics are applied as matrix material, and particularly suitable are those matrices that can be applied as a dispersion in water. Examples of suitable polymer materials include: acrylates, polyurethanes, modified polyolefins including SEBS and SIS polymers, as such known in the field of ballistic resistant articles and ethylene vinyl acetate. Preferably, the matrix material contains a polyurethane. More preferably, the polyurethane is a polyetherurethane; that is based on a polyetherdiol, since that provides good performance over a wide temperature range. In a special embodiment, the polyurethane or polyetherurethane is based on aliphatic diisocyanates as this further improves product performance, including its colour stability. The 100% modulus of these plastic matrix materials for unidirectionally aligned fibers is at least 3 MPa. Preferably the 100% modulus is at least 5 MPa. The 100% modulus is generally lower than 500 MPa.

In another preferred embodiment, a suitable alternative matrix material for unidirectionally aligned fibers is Kraton^{®}, applied from an aqueous dispersion. Kraton^{®} polymers comprise a styrene-isoprene-styrene (SIS) triblock copolymer composition with a 100% modulus of 1.4 MPa.

### Test Procedures

Anti-ballistic performance, V50 and Eabs were determined at 21 °C with test procedures according to Stanag 2920, using 9mm*19 Natoball DM11 A1B2 bullet manufactured by MEN, Germany, in this application measured at test specimen with an areal density of 3.3 kg/m². In the event of thicker/heavier samples, the antiballistic performance may also be measured at test specimen with an areal density of 5.4 kg/m². After conditioning at 21 °C and 65% relative humidity during at least 18 hours, an anti-ballistic sample was fixed using flexible straps on a support filed with Caran d'Ache backing material, which was conditioned at room temperature. The kinetic energy of the bullet at V₅₀ (0.5*m_{bullet}*V₅₀²) was divided by the total areal density of the armor to obtain a so-called Eabs value. Eabs reflects the stopping power of the armor relative to its weight/thickness thereof. The higher the Eabs value, the better the anti-ballistic performance.

The modulus of the matrix material was determined according to ISO 527. The 100% modulus was determined on film strips with a length of 100 mm (free length between the clamps) and a width of 24 mm. The 100% modulus is the secant modulus measured between strains of 0% and 100%.

Tensile strength (or strength), are defined and determined on multifilament yarns as specified in ASTM D885M, measured at 25 °C using a nominal gauge length of the fiber of 500 mm, a crosshead speed of 50%/min. On the basis of the measured stress-strain curve the modulus is determined as the gradient between 0.3 and 1% strain. For calculation of the modulus and strength, the tensile forces measured are divided by the titre, as determined by weighing 10 meters of fiber; values in GPa are calculated assuming a density of 0.97 g/cm³.

The glass transition temperatures use the values in °C determined experimentally using differential scanning calorimetry DSC, taking the peak of the derivative curve as Tg.

Polymer number average molecular weight of the acrylic thermoplastic material is determined by gel permeation chromatography according DIN 55672 at 40 °C, with tetrahydrofuran as solvent, styrene/divinyl bezene as packing material and calibrated using Polystyrene Mp 160-10,000,000 (polymer standard service (PSS) DIN certified as standard.

Intrinsic Viscosity (IV) of UHMWPE is determined according to ASTM D1601, at 135°C in decalin, the dissolution time being 16 hours, with DBPC as antioxidant in an amount of 2 g/l solution, by extrapolating the viscosity as measured at different concentrations to zero concentration;

The invention will now further be elucidated by the following example and experiments, without being limited thereto.

### Comparative Experiment A

A non woven product in the form of a mono-layer was produced from Dyneema^{®} UHMWPE fibers with a strength of 3.5GPa. For that purpose the Dyneema^{®} fibers were guided over a comb to align them in parallel after which the fibers were wetted with an aqueous dispersion of a matrix material. After drying, the obtained mono-layer contained 33 gram of parallel (unidirectional) aligned UHMWPE fibers and 16 wt% of Kraton^{®} thermoplastic elastomer (polystyrene-polyisoprene-polystyrene block copolymer with a Tg of about -40 °C) as matrix material. Kraton^{®} thermoplastic elastomer is a well-known matrix used for ballistic applications giving the best bullet stopping power. A preformed sheet was produced by stacking 4 monolayers (whereby the fiber direction in adjacent mono-layes were oriented at an angle of 90 degrees), and one Stamylex^{®} linear low-density polyethylene film with a thickness of 7.6 micron (equivalent to an areal density of about 7 g/m²)) at one outer side of the stack followed by consolidating the stack at a pressure of about 2 MPa and at a temperature of about 130°C.

A flat ballistic-resistant article was made from a loose, non-linked assembly of a number of preformed sheets, the assembly being stitched through at the corners. Ballistic performance for three different assemblies was tested with a bullet type 9mm*19 Natoball DM11 A1B2; V₅₀ and Eabs results are given in Table 1. The obtained sheet was cut in strips of 38cm long and 10cm wide and tested on their stiffness by putting one strip on a flat surface and having 16 cm protruding from the table. The downward deflection of the outer most part of the unsupported section of the strip was measured, whereby a higher downward deflection indicates a lower stiffness.

### Example I

A mono-layer was produced from Dyneema^{®} UHMWPE fibers with a strength of 3.5GPa in the same way as for comparative experiment A. In this case a Neocryl^{®} from DSM Neoresins was used as matrix material. After drying, the obtained mono-layer contained 33 gram of parallel (unidirectional) aligned UHMWPE fibers and 16 wt% of Neocryl^{®} (methylmethacrylate acrylic copolymer with a Tg of 35 °C) as matrix material. A preformed sheet was produced in the same way as Comparative Experiment A by stacking 4 monolayers and one outer Stamylex^{®} linear low-density polyethylene film.

A flat ballistic-resistant article was made from a loose, non-linked assembly of a number of preformed sheets, the assembly being stitched through at the corners.

The downward deflection is 68mm, which is lower than the 137mm for Comparative Experiment A, hence indicating a higher stiffness of the sheets of Example 1.

**Table 1:**

| Experiment/ Example | Weight [kg/m²] | V50 [m/s] | Eabs [J/kg/m²] | Downward deflection [mm] |
|---|---|---|---|---|
| A | 3.3 | 376 | 170 | 137 |
| I | 3.3 | 425 | 217 | 68 |

Table 1 shows that despite the higher stiffness of the sheet according to the invention, a higher projectile stopping performance could be reached. This is against the common belief that best projectile stopping performance is achieved with a soft (i.e. not stiff) matrix system and sheets.

## Claims

1. Preformed sheet, comprising a network of polyethylene fibers having a tensile strength of at least 1.5 GPa, impregnated with at least 10% of a plastic material wherein the plastic material is an acrylic based thermoplastic material with a glass transition temperature of at least 25 °C, the glass transition temperature being determined experimentally using differential scanning calorimetry DSC, taking the peak of the derivative curve as glass transition temperature; the tensile strength being defined and determined on multifilament yarns as specified in ASTM D885M.

2. Preformed sheet according to claim 1, wherein the network of fibers comprises a fabric.

3. Preformed sheet according to claim 1 wherein the network of fibers comprises unidirectionally aligned fibers.

4. Preformed sheet according to claim 1-3, wherein the fibers are UHMWPE fibers.

5. Preformed sheet according to claim 1-4, wherein the preformed sheet comprises a separating film on at least one of its outer surfaces.

6. Preformed sheet according to claim 5, wherein the separating film is a biaxially stretched polyolefin film.

7. Assembly of at least two preformed sheets according to any one of the preceding claims, which sheets are substantially not linked to one another.

8. Ballistic resistant article comprising at least one assembly according to claim 7.

9. Ballistic resistant article comprising a plurality of preformed sheets according to claim 2 having an Eabs of more than 180 J/kg/m² for 9mm*19 Natoball DM11 A1B2 bullet.

10. Ballistic resistant article according to claim 9, further comprising at least two networks of unidirectionally aligned fibers with optionally a matrix.

11. Ballistic resistant article according to claim 10, wherein the matrix for the unidirectional aligned fibers comprises a modified polyolefin, a SIS, or a SEBS.

12. Ballistic resistant article according to claim 10, wherein the matrix for the unidirectional aligned fibers comprises a polyurethane.

13. Ballistic resistant article according to claim 10, wherein the matrix for the unidirectional aligned fibers is an acrylic based thermoplastic material with a glass transition temperature of at least 25 °C.

14. Use of the preformed sheet according to claim 1-6 in the manufacture of ballistic resistant composites.

## Patentansprüche

1. Vorgeformte Fläche, umfassend ein Netzwerk von Polyethylenfasern mit einer Zugfestigkeit von mindestens 1,5 GPa, imprägniert mit mindestens 10 % eines Kunststoffs, wobei es sich bei dem Kunststoff um ein thermoplastisches Material auf Acryl-Basis mit einer Glasübergangstemperatur von mindestens 25 °C handelt, wobei die Glasübergangstemperatur mittels Differentialkalorimetrie DSC experimentell bestimmt wird, wobei das Maximum der Ableitungskurve als Glasübergangstemperatur genommen wird; wobei die Zugfestigkeit entsprechend ASTM D885M an Multifilamentgarnen definiert und bestimmt wird.

2. Vorgeformte Fläche nach Anspruch 1, wobei das Netzwerk von Fasern ein textiles Flächengebilde umfasst.

3. Vorgeformte Fläche nach Anspruch 1, wobei das Netzwerk von Fasern unidirektional ausgerichtete Fasern umfasst.

4. Vorgeformte Fläche nach Anspruch 1-3, wobei es sich bei den Fasern um UHMWPE-Fasern handelt.

5. Vorgeformte Fläche nach Anspruch 1-4, wobei die vorgeformte Fläche eine Trennfolie auf mindestens einer ihrer Außenflächen umfasst.

6. Vorgeformte Fläche nach Anspruch 5, wobei es sich bei der Trennfolie um eine biaxial gestreckte Polyolefinfolie handelt.

7. Anordnung mindestens zweier vorgeformter Flächen nach einem der vorhergehenden Ansprüche, wobei die Flächen weitgehend nicht miteinander verknüpft sind.

8. Ballistikschutzgegenstand, umfassend mindestens eine Anordnung nach Anspruch 7.

9. Ballistikschutzgegenstand, umfassend mehrere vorgeformte Flächen nach Anspruch 2 mit einer Eabs von mehr als 180 J/kg/m² für ein Geschoss Natoball DM11 A1B2 9 mm x 19.

10. Ballistikschutzgegenstand nach Anspruch 9, ferner umfassend mindestens zwei Netzwerke von unidirektional ausgerichteten Fasern, gegebenenfalls mit einer Matrix.

11. Ballistikschutzgegenstand nach Anspruch 10, wobei die Matrix für die unidirektional ausgerichteten Fasern ein modifiziertes Polyolefin, ein SIS oder ein SEBS umfasst.

12. Ballistikschutzgegenstand nach Anspruch 10, wobei die Matrix für die unidirektional ausgerichteten Fasern ein Polyurethan umfasst.

13. Ballistikschutzgegenstand nach Anspruch 10, wobei es sich bei der Matrix für die unidirektional ausgerichteten Fasern um ein thermoplastisches Material auf Acryl-Basis mit einer Glasübergangstemperatur von mindestens 25 °C handelt.

14. Verwendung der vorgebildeten Fläche nach Anspruch 1-6 bei der Herstellung von Ballistikschutzverbunden.

## Revendications

1. Feuille préformée, comprenant un réseau de fibres de polyéthylène possédant une résistance à la traction d'au moins 1,5 GPa, imprégnée avec au moins 10 % d'une matière plastique dotée d'une température de transition vitreuse d'au moins 25 °C, la température de transition vitreuse étant déterminée de manière expérimentale au moyen de calorimétrie différentielle à balayage DSC, en prenant le maximum de la courbe dérivée comme température de transition vitreuse ; la résistance à la traction étant définie et déterminée sur des fils multifilament comme spécifié dans la norme ASTM D885M.

2. Feuille préformée selon la revendication 1, le réseau de fibres comprenant un tissu.

3. Feuille préformée selon la revendication 1, le réseau de fibres comprenant des fibres alignées de manière unidirectionnelle.

4. Feuille préformée selon les revendications 1 à 3, les fibres étant des fibres de UHMWPE.

5. Feuille préformée selon les revendications 1 à 4, la feuille préformée comprenant un film de séparation sur au moins l'une de ses surfaces externes.

6. Feuille préformée selon la revendication 5, le fil de séparation étant un film de polyoléfine étiré de manière biaxiale.

7. Ensemble d'au moins deux feuilles préformées selon l'une quelconque des revendications précédentes, lesquels feuilles n'étant sensiblement pas liées les unes aux autres.

8. Article à résistance balistique comprenant au moins un ensemble selon la revendication 7.

9. Article à résistance balistique comprenant une pluralité de feuilles préformées selon la revendication 2 possédant un Eabs supérieur à 180 J/kg/m² pour une balle de 9mm*19 Natoball DM11 A1B2.

10. Article à résistance balistique selon la revendication 9, comprenant en outre au moins deux réseaux de fibres alignées de manière unidirectionnelle comportant éventuellement une matrice.

11. Article à résistance balistique selon la revendication 10, la matrice pour les fibres alignées de manière unidirectionnelle comprenant une polyoléfine modifiée, un SIS, ou un SEBS.

12. Article à résistance balistique selon la revendication 10, la matrice pour les fibres alignées de manière unidirectionnelle comprenant un polyuréthane.

13. Article à résistance balistique selon la revendication 10, la matrice pour les fibres alignées de manière unidirectionnelle étant un matériau thermoplastique à base d'acrylique doté d'une température de transition vitreuse d'au moins 25 °C.

14. Utilisation de la feuille préformée selon les revendications 1 à 6 dans la fabrication de composites à résistance balistique.
